# EUROPÄISCHE PATENTSCHRIFT

(11) **EP 1 935 730 B1**
(45) Veröffentlichungstag und Bekanntmachung des Hinweises auf die Patenterteilung: **06.03.2013**
(21) Anmeldenummer: 07021061.2
(22) Anmeldetag: 27.10.2007
(51) Int. Cl.: B60S 1/34

(54) **Scheibenwischeranlage und Wischerarm für ein Fahrzeug**
Windscreen wiper assembly and wiper arm for a vehicle
Installation d'essuie-glace et bras d'essuie-glace pour un véhicule

(30) Priorität: 22.12.2006 DE 102006061363
(43) Veröffentlichungstag der Anmeldung: 25.06.2008
(73) Patentinhaber: Volkswagen Aktiengesellschaft, 38440 Wolfsburg (DE)
(72) Erfinder: Ostrowski, Wolfgang, 38446 Wolfsburg (DE); Engelhardt, Andreas, 38446 Wolfsburg (DE); Meister, Nadine, 38446 Wolfsburg (DE)

(56) Entgegenhaltungen:
- DE-A1- 2 010 922
- US-A- 1 641 683
- US-A- 2 657 083
- US-E- R E21 594

## Beschreibung

Die Erfindung betrifft eine Scheibenwischeranlage für ein Fahrzeug mit einer fahrzeugfesten Antriebseinheit, wenigstens einer fahrzeugseitig gelagerten Wischerwelle und einem an dieser anordbaren Wischerarm.

Derartige Scheibenwischeranlagen sind bekannt. Üblicherweise ist die Wischerwelle wischerarmseitig mit einem Konus zur drehfesten Anordnung des Wischerarmes versehen. An das verjüngte Ende des Konus ist ein zylindrischer Ansatz mit einem Gewinde angeschlossen, auf das eine Mutter geschraubt ist, die den Wischerarm auf den Konus der Wischerwelle drückt und drehfest mit dieser verbindet. Der jeweilige Wischerarm ist dazu mit einem mit dem Konus der Wischerwelle korrespondierenden Innenkonus versehen, der auf den Konus gepresst wird. Dabei kann der Konus mit einer Rändelung versehen sein, die sich beim Aufpressen des Wischerarmes in dessen mit einer glatten Fläche ausgeführten Innenkonus eingräbt und durch den entstehenden Formschluss zusätzlich zum erzeugten Kraftschluss das von der Wischerwelle auf den Wischerarm übertragbare Drehmoment erhöht. Eine derartige Ausführung einer Wischerwelle ist beispielsweise in der DE 199 46 630 A1 beschrieben.

Die Montage des Wischerarmes durch Verschrauben mit der fahrzeugseitig gelagerten und in ihrer vorbestimmten Drehwinkelposition fixierten Wischerwelle muss mit Hilfe eines Mutternschlüssels vorgenommen werden. Trotz der Fixierung des Wischerarmes in dessen vorbestimmter Winkelposition an der Wischerwelle kann dabei ein Winkelversatz zwischen diesen auftreten, durch den neben einer Verlagerung des Wischfeldes auch die Genauigkeit einer Parkposition des Scheibenwischers reduziert wird, für den nur ein eng begrenzter Parkraum zwischen der Fahrzeugkarosserie und der Fronthaube des Fahrzeugs am unteren Rand oder unterhalb der Fahrzeugscheibe zur Verfügung steht. Dieser auftretende Winkelversatz muss durch eine der Montage nachgeordnete Justierung korrigiert werden, wodurch der Montageaufwand erhöht wird.

Die Druckschrift DE 20 10 922 A1 offenbart eine Wischerwelle, die über ein Befestigungsteil mit einem Metallträger eines Wischerlagers verschwenkbar verbunden ist. Hierbei weist das Befestigungsteil Lagerbolzen auf, die in entsprechende Aufnahmen im Wischerarmende einrasten, so dass die Wischerwelle von einer Scheibe abklappbar ist.

Es ist Aufgabe der Erfindung, eine Scheibenwischeranlage für ein Fahrzeug nach dem Oberbegriff des Anspruchs 1 so zu gestalten, dass der Wischerarm werkzeuglos an der Wischerwelle montierbar ist und dass ein Winkelversatz desselben bei der Montage ausgeschlossen ist.

Diese Aufgabe wird bei einer Scheibenwischeranlage nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, dass bei einer Scheibenwischeranlage mit wenigstens einer fahrzeugfesten Antriebseinheit, die wenigstens eine fahrzeugseitig gelagerte Wischerwelle zur bewegungsfesten Anordnung eines Wischerarmes aufweist, die Wischerwelle wischerarmseitig um 90° abgewinkelt ist, und dass der Wischerarm mit seinem Befestigungsteil mit dem abgewinkelten Endstück der Wischerwelle verdrehfest rastverbunden ist. Mit dieser Ausbildung der Wischerwelle und dieser Anordnung des Wischerarmes an der Wischerwelle wird eine werkzeuglose Montage ermöglicht, und ein Winkelversatz tritt bei dieser nicht auf, so dass auch eine Justierung entfällt. Zudem ergibt sich die Möglichkeit des Einsatzes eines kostengünstigen Materials für das Befestigungsteil des Wischerarmes, insbesondere eines Kunststoffes.

Im Befestigungsteil kann vorteilhaft eine in Richtung seiner Längserstreckung ausgebildete Aufnahme für das abgewinkelte Endstück der Wischerwelle angeordnet sein, der eine Rasteinrichtung zugeordnet ist. Diese Aufnahme ermöglicht es, einen Wischerarm mit seinem Befestigungsteil auf einfache Weise durch Aufschieben auf das abgewinkelte Endstück der Wischerwelle an dieser anzuordnen. Sobald das Befestigungsteil mit seiner Aufnahme seine vorbestimmte Anordnungsposition an dem Endstück erreicht hat, greift die Rasteinrichtung und fixiert die beiden Bauteile aneinander.

Die Rasteinrichtung kann dabei fahrzeugseitig im Abstand am Befestigungsteil angeordnet und derart ausgebildet sein, dass diese die in die Aufnahme eingeführte und in dieser vorbestimmt positionierte Wischerwelle im Abstand vom Befestigungsteil im Bereich zwischen deren Abwinklung und dem Fahrzeug auf der dem Wischerarm abgewandten Seite hintergreift und das Befestigungsteil pendelbewegungsfest haltert. Zudem stellt diese Anordnung und Ausbildung der Rasteinrichtung eine verdrehfeste Verbindung des Befestigungsteils mit dem abgewinkelten Endstück der Wischerwelle sicher.

Dabei kann die Rasteinrichtung eine Rastaufnahme mit einer zur Achse der Aufnahme parallelen Aufnahmeachse umfassen, die durch zwei beidseits dieser Achse ausgebildete, leicht vorgespannte und elastisch aufweitbare Schenkel gebildet ist, die wischerwellenseitig an den Umfang der Wischerwelle angepasst sind und die in ihrer Rastposition die Wischerwelle vorgespannt umklammern.

Die Erfindung wird nachstehend anhand eines Ausführungsbeispiels erläutert. In den zugehörigen Zeichnungen zeigen:
- Fig. 1:: ein Wischerwellenlager einer Scheibenwischeranlage mit einer Wischerwelle und einem dieser zugeordneten Befestigungsteil eines Scheibenwischerarmes,
- Fig. 2:: das Befestigungsteil im an der Wischerwelle montierten Zustand,
- Fig. 3:: die Montageanordnung im Axialschnitt und
- Fig. 4:: eine am Befestigungsteil ausgebildete Rasteinrichtung im Schnitt IV - IV.

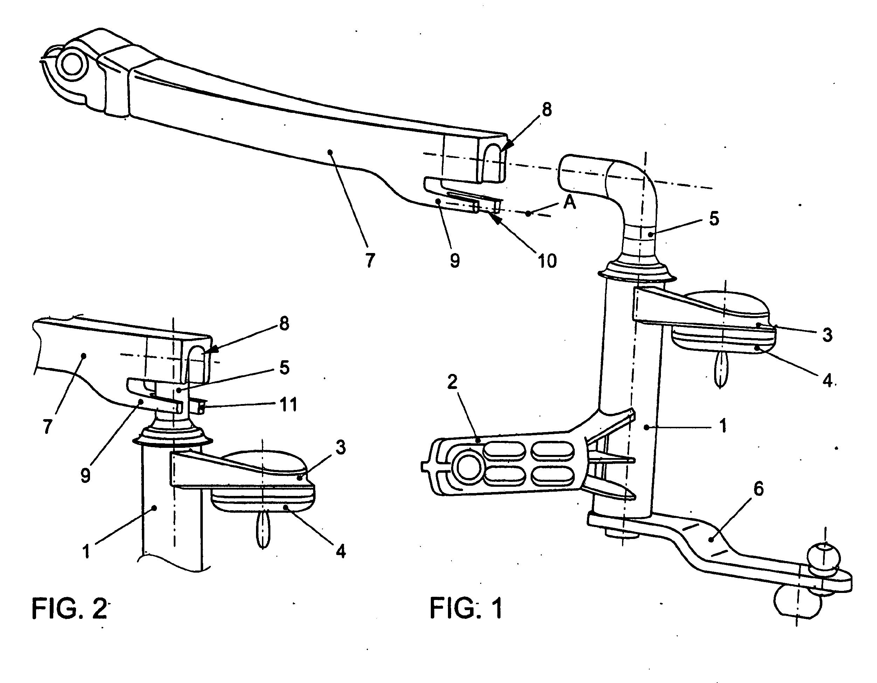

Das in Fig. 1 gezeigte Wischerwellenlager 1 bekannter Bauart ist mit einem Befestigungsansatz 2 für einen nicht dargestellten, im Karosserieinnern eines Fahrzeugs angeordneten Rohrträger einer Frontscheibenwischeranlage und einem Befestigungselement 3 mit einem Dämpfungselement 4 zur Anordnung an der Fahrzeugkarosserie versehen. Im Wischerwellenlager 1 ist eine wischerarmseitig um 90° abgewinkelte Wischerwelle 5 angeordnet, die fahrzeuginnenseitig mit einem (Antriebs-) Schwinghebel 6 fest verbunden ist, der an einem mit einer Antriebseinheit verbundenen Gestänge angelenkt ist (nicht dargestellt), die den Schwinghebel 6 und damit die Wischerwelle 5 zu einer Pendelbewegung entreiben. Das abgewinkelte Endstück der Wischerwelle 5 dient der Anordnung eines Befestigungsteiles 7 aus Kunststoff (PA 66 GF) des dieser zugeordneten, jedoch nicht weiter dargestellten Wischerarmes.

Im Befestigungsteil 7 ist wischerwellenseitig in Richtung seiner Längserstreckung eine Aufnahme 8 für das abgewinkelte Endstück der Wischerwelle 5 ausgebildet, die (8) in einem dem Wischerarm zugewandten Bereich einen an die Wischerwelle 5 angepassten kreisförmigen Querschnitt aufweist. Unterhalb der Aufnahme 8, also fahrzeugkarosserieseitig, ist am Befestigungsteil 7 eine Rasteinrichtung 9 für die Wischerwelle 5 angeformt, deren Rastaufnahme 10 im ("radialen") Abstand vom Befestigungsteil 7 angeordnet ist, wobei der Abstand derart bemessen ist, dass die Rasteinrichtung 9 mit der Wischerwelle 5 im Bereich zwischen deren Abwinklung und der Fahrzeugkarosserie in Eingriff gelangt.

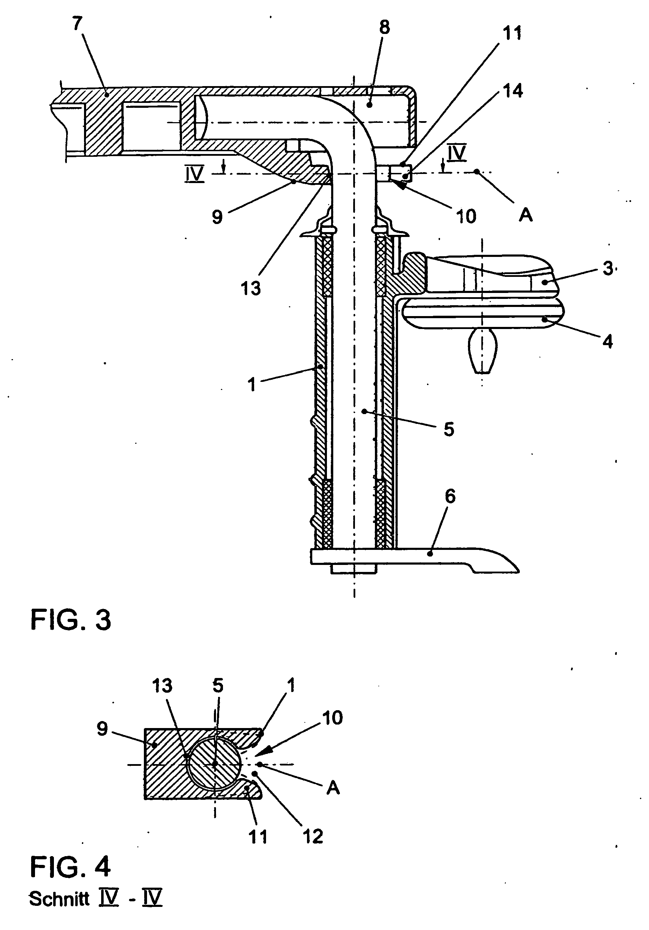

Die Fig. 2 und 3 zeigen den Verrastungszustand und damit zugleich die Montageanordnung des Befestigungsteils 7 an der Wischerwelle 5. Die Rasteinrichtung 9 ist in der Art eines stabilen Halterungsbockes mit zwei an diesem ausgebildeten befestigungsteilparallelen Rastschenkeln 11 am Befestigungsteil 7 angeformt. Die Rastschenkel 11 bilden zugleich die Rastaufnahme 10 mit einer Aufnahmeachse A aus, sind beidseits derselben angeordnet und zu deren (A) Seite hin an den Querschnitt der Wischerwelle 5 angepasst, was durch die Fig. 4 verdeutlicht ist. An ihrem der (Einführ-) Öffnung 12 der Rastaufnahme 10 abgewandten Ende bilden die Rastschenkel 11 mit ihrem Verbindungsbereich einen Anschlag 13 für die Wischerwelle 5 aus. Mit ihrem freien Ende umfassen die Rastschenkel 11 die Wischerwelle 5 in einem Bereich von jeweils etwa 45°, leicht vorgespannt (Ausgangszustand ohne Wischerwelle 5 gestrichelt dargestellt), und fixieren diese in der Rastaufaufnahme 10. Öffnungsseitig sind die Rastschenkel 11 mit einer Einführschräge 14 versehen.

Zur Anordnung des Befestigungsteils 7 mit dem an diesem angeordneten Wischerarm an der Wischerwelle 5 wird dieses mit der Aufnahme 8 auf das Endstück der derselben geschoben und mit der Rastaufnahme 10 auf den fahrzeugkarosserieseitigen Teil der Wischerwelle 5 gedrückt, wobei die leicht vorgespannten Rastschenkel 11 elastisch gespreizt werden. In der Anschlagposition der Wischerwelle 5 in der Rastaufnahme 10 umklammern diese (11) die Wischerwelle 5 und haltern das Befestigungsteil 7 in der gegebenen Position an der Wischerwelle 5 sowohl pendelbewegungs- als auch verdrehfest.

### Bezugszeichenliste

- 1: Wischerwellenlager
- 2: Befestigungsansatz
- 3: Befestigungselement
- 4: Dämpfungselement
- 5: Wischerwelle
- 6: Schwinghebel
- 7: Befestigungsteil
- 8: Aufnahme
- 9: Rasteinrichtung
- 10: Rastaufnahme
- 11: Rastschenkel
- 12: Öffnung
- 13: Anschlag
- 14: Einführschräge
- A: Aufnahmeachse

## Patentansprüche

1. Scheibenwischeranlage für ein Fahrzeug, die wenigstens eine fahrzeugfeste Antriebseinheit mit wenigstens einer fahrzeugseitig gelagerten Wischerwelle (5) zur bewegungsfesten Anordnung eines Wischerarmes aufweist, **dadurch gekennzeichnet, dass** die Wischerwelle (5) wischerarmseitig um 90° abgewinkelt ist, und dass der Wischerarm mit seinem Befestigungsteil (7) mit dem abgewinkelten Endstück der Wischerwelle (5) verdrehfest rastverbunden ist.

2. Scheibenwischeranlage nach Anspruch 1, **dadurch gekennzeichnet, dass** das Befestigungsteil (7) eine in Richtung seiner Längserstreckung ausgebildete Aufnahme (8) für das abgewinkelte Endstück der Wischerwelle (5) aufweist, und dass der Aufnahme (8) eine Rasteinrichtung (9) zugeordnet ist.

3. Scheibenwischeranlage nach Anspruch 1 oder 2, **dadurch gekennzeichnet, dass** die Rasteinrichtung (9) fahrzeugseitig am Befestigungsteil (7) und in einem solchen Abstand von diesem ausgebildet ist, dass diese (9) die in die Aufnahme (8) eingeführte und in dieser vorbestimmt positionierte Wischerwelle (5) im Bereich zwischen deren Abwinklung und dem Fahrzeug auf der dem Wischerarm (5) abgewandten Seite hintergreift.

4. Scheibenwischeranlage nach Anspruch 3, **dadurch gekennzeichnet, dass** die Rasteinrichtung (9) eine Rastaufnahme (10) mit einer zur Achse der Aufnahme (8) parallelen Aufnahmeachse (A) und zwei beidseits dieser ausgebildeten, leicht vorgespannten und elastisch aufweitbaren Schenkel (11) ist, die wischerwellenseitig an den Umfang der Wischerwelle (5) angepasst sind und die in ihrer Rastposition die Wischerwelle (5) vorgespannt umklammern.

5. Scheibenwischeranlage nach Anspruch 1, 2 oder 3, **dadurch gekennzeichnet, dass** das Befestigungsteil (7) aus Kunststoff, insbesondere PA 66 GF oder PBT GF 50, gefertigt ist.

6. Wischerarm für eine Scheibenwischeranlage an einem Fahrzeug, mit einem Befestigungsteil (7) zur pendelbewegungsfesten Anordnung an einer fahrzeugseitig gelagerten und mit einer Antriebseinheit verbundenen Wischerwelle (5) und mit einer andernends angeordneten Anschlussvorrichtung für ein Wischerblatt, **dadurch gekennzeichnet, dass** das Befestigungsteil (7) wischerwellenseitig eine in Richtung seiner Längserstreckung ausgebildete Aufnahme (8) für das um 90° abgewinkelte Endstück der Wischerwelle (5) und eine fahrzeugseitig ausgebildete Rasteinrichtung (9) zum verdrehfesten Verbinden und Hintergreifen der mit dem Endstück in der Aufnahme (8) in einer vorbestimmten Rastposition befindlichen Wischerwelle (5) im Bereich zwischen der Abwinklung und dem Fahrzeug aufweist.

7. Wischerarm nach Anspruch 6, **dadurch gekennzeichnet, dass** die Rasteinrichtung (9) eine Rastaufnahme (10) mit einer zur Achse der Aufnahme (8) parallelen Aufnahmeachse (A) und zwei beidseits dieser ausgebildeten, leicht vorgespannten und elastisch aufweitbaren Schenkel (11) ist, die wischerwellenseitig an den Umfang der Wischerwelle (5) angepasst sind und die in ihrer Rastposition die Wischerwelle (5) vorgespannt umklammern.

8. Wischerarm nach Anspruch 6, **dadurch gekennzeichnet, dass** das Befestigungsteil (7) aus Kunststoff, insbesondere PA 66 GF oder PBT GF 50, gefertigt ist.

## Claims

1. Windscreen wiper assembly for a vehicle, which has at least one vehicle-mounted drive unit with at least one wiper shaft (5) which is mounted on the vehicle side and is intended for the movement-fixed arrangement of a wiper arm, **characterized in that** the wiper shaft (5) is angled by 90° on the wiper arm side, and **in that** the wiper arm is latched by the fastening part (7) thereof to the angled end piece of the wiper shaft (5) in a torsionproof manner.

2. Windscreen wiper assembly according to Claim 1, **characterized in that** the fastening part (7) has a receptacle (8) which is formed in the direction of the longitudinal extent thereof and is intended for the angled end piece of the wiper shaft (5), and **in that** the receptacle (8) is assigned a latching device (9).

3. Windscreen wiper assembly according to Claim 1 or 2, **characterized in that** the latching device (9) is formed on the fastening part (7) on the vehicle side and at such a distance from said fastening part that said latching device (9) engages behind the wiper shaft (5), which is introduced into the receptacle (8) and is positioned in a predetermined manner in the latter, in the region between the angled portion of said wiper shaft and the vehicle on the side facing away from the wiper arm (5).

4. Windscreen wiper assembly according to Claim 3, **characterized in that** the latching device (9) is a latching receptacle (10) with a receiving axis (A) parallel to the axis of the receptacle (8) and two lightly prestressed and elastically expandable limbs (11) which are formed on both sides of said receiving axis, are matched on the wiper shaft side to the circumference of the wiper shaft (5) and, in the latching position thereof, embrace the wiper shaft (5) in a prestressed manner.

5. Windscreen wiper assembly according to Claim 1, 2 or 3, **characterized in that** the fastening part (7) is manufactured from plastic, in particular PA 66 GF or PBT GF 50.

6. Wiper arm for a windscreen wiper assembly on a vehicle, with a fastening part (7) for arrangement in a manner fixed against an oscillating movement on a wiper shaft (5), which is mounted on the vehicle side and is connected to a drive unit, and with a connecting device which is arranged at the other end and is intended for a wiper blade, **characterized in that** the fastening part (7) on the wiper shaft side has a receptacle (8) which is formed in the direction of the longitudinal extent thereof for the end piece, which is angled by 90°, of the wiper shaft (5) and a latching device (9) which is formed on the vehicle side and is intended for the torsionproof connection of and engagement behind the wiper shaft (5), which is in a predetermined latching position with the end piece in the receptacle (8), in the region between the angled portion and the vehicle.

7. Wiper arm according to Claim 6, **characterized in that** the latching device (9) is a latching receptacle (10) with a receiving axis (A) parallel to the axis of the receptacle (8) and two lightly prestressed and elastically expandable limbs (11) which are formed on both sides of said receiving axis, are matched on the wiper shaft side to the circumference of the wiper shaft (5) and, in the latching position thereof, embrace the wiper shaft (5) in a prestressed manner.

8. Wiper arm according to Claim 6, **characterized in that** the fastening part (7) is manufactured from plastic, in particular PA 66 GF or PBT GF 50.

## Revendications

1. Installation d'essuie-glace pour un véhicule, qui présente au moins une unité d'entraînement fixée au véhicule avec au moins un arbre d'essuie-glace (5) monté du côté du véhicule, pour l'agencement solidaire en mouvement d'un bras d'essuie-glace, **caractérisée en ce que** l'arbre d'essuie-glace (5) est coudé de 90° du côté du bras d'essuie-glace, et **en ce que** le bras d'essuie-glace est connecté par encliquetage de manière solidaire en rotation par sa partie de fixation (7) à l'embout coudé de l'arbre d'essuie-glace (5).

2. Installation d'essuie-glace selon la revendication 1, **caractérisée en ce que** la partie de fixation (7) présente un logement (8) réalisé dans la direction de son étendue longitudinale pour l'embout coudé de l'arbre d'essuie-glace (5), et **en ce que** le logement (8) est associé à un dispositif d'encliquetage (9).

3. Installation d'essuie-glace selon la revendication 1 ou 2, **caractérisée en ce que** le dispositif d'encliquetage (9) est réalisé du côté du véhicule sur la partie de fixation (7) et à une distance de celui-ci telle que le dispositif d'encliquetage (9) vienne en prise par l'arrière avec l'arbre d'essuie-glace (5) introduit dans le logement (8) et positionné de manière prédéterminée dans celui-ci, dans la région entre son coudage et le véhicule, sur le côté opposé au bras d'essuie-glace (5).

4. Installation d'essuie-glace selon la revendication 3, **caractérisée en ce que** le dispositif d'encliquetage (9) est un logement d'encliquetage (10) avec un axe de logement (A) parallèle à l'axe du logement (8) et avec deux branches (11) réalisées de part et d'autre de l'axe de logement (A), légèrement précontraintes et pouvant être écartées élastiquement, qui sont adaptées du côté de l'arbre d'essuie-glace à la périphérie de l'arbre d'essuie-glace (5) et qui enserrent l'arbre d'essuie-glace (5) de manière précontrainte dans leur position d'encliquetage.

5. Installation d'essuie-glace selon la revendication 1, 2 ou 3, **caractérisée en ce que** la partie de fixation (7) est fabriquée en plastique, en particulier en PA 66 GF ou en PBT GF 50.

6. Bras d'essuie-glace pour une installation d'essuie-glace d'un véhicule, comprenant une partie de fixation (7) pour l'agencement solidaire en mouvement pendulaire à un arbre d'essuie-glace (5) monté du côté du véhicule et connecté à une unité d'entraînement, et comprenant un dispositif de raccordement disposé à l'autre extrémité pour un balai d'essuie-glace, **caractérisé en ce que** la partie de fixation (7) présente, du côté de l'arbre d'essuie-glace, un logement (8) réalisé dans la direction de son étendue longitudinale, pour l'embout coudé à 90° de l'arbre d'essuie-glace (5), et un dispositif d'encliquetage (9) réalisé du côté du véhicule pour la connexion solidaire en rotation et l'engagement par l'arrière de l'arbre d'essuie-glace (5) se trouvant avec l'embout dans le logement (8) dans une position d'encliquetage prédéterminée, dans la région entre le coudage et le véhicule.

7. Bras d'essuie-glace selon la revendication 6, **caractérisé en ce que** le dispositif d'encliquetage (9) est un logement d'encliquetage (10) avec un axe de logement (A) parallèle à l'axe du logement (8) et avec deux branches (11) réalisées de part et d'autre de l'axe de logement (A), légèrement précontraintes et pouvant être écartées élastiquement, qui sont adaptées du côté de l'arbre d'essuie-glace à la périphérie de l'arbre d'essuie-glace (5) et qui enserrent l'arbre d'essuie-glace (5) de manière précontrainte dans leur position d'encliquetage.

8. Bras d'essuie-glace selon la revendication 6, **caractérisé en ce que** la partie de fixation (7) est fabriquée en plastique, en particulier en PA 66 GF ou en PBT GF 50.
